# EUROPÄISCHE PATENTSCHRIFT

(11) **EP 2 463 199 B1**
(45) Veröffentlichungstag und Bekanntmachung des Hinweises auf die Patenterteilung: **20.02.2013**
(21) Anmeldenummer: 10015408.7
(22) Anmeldetag: 08.12.2010
(51) Int. Cl.: B64F 1/305

(54) **Boden eines Kuppelmoduls als Schnittstelle zwischen einer Fluggastbrücke oder einer Fluggasttreppe und einem Flugzeug**
Base of a coupling module as an interface between passenger bridge or passenger steps and an aircraft
Sol d'un module de couplage comme interface entre une passerelle ou un escalier d'embarquement et un avion

(43) Veröffentlichungstag der Anmeldung: 13.06.2012
(73) Patentinhaber: Hübner GmbH, 34123 Kassel (DE)
(72) Erfinder: Scharf, Lothar, 37242 Bad Sooden-Allendorf (DE); Gutkuhn, Detlef, 34314 Espenau (DE)
(74) Vertreter: Walther, Walther & Hinz GbR

(56) Entgegenhaltungen:
- WO-A2-99/50143
- US-A- 3 964 118
- US-A- 4 553 720

## Beschreibung

Die Erfindung betrifft einen Boden eines Kuppelmoduls als Schnittstelle zwischen einer Fluggastbrücke oder einer Fluggasttreppe und einem Flugzeug, wobei der Boden einen feststehenden Bodenabschnitt und ein Bodenkopfteil umfasst.

Ein Beispiel ist in Dokument WO 9950143 zu finden.

Fluggastbrücken sind aus dem Stand der Technik hinreichend bekannt. Fluggastbrücken dienen dem Übergang für Personen von dem Flugzeug unmittelbar in das Flughafengebäude. Da das Flughafengebäude üblicherweise höher ist als die Türöffnung des Flugzeugs, verlaufen die Fluggastbrücken, die am vorderen Ende durch ein Fahrgestell gehalten sind, häufig schräg nach unten in Richtung der Türöffnung des Flugzeugs. Am unteren Ende der Fluggastbrücke weist die Fluggastbrücke eine bis zu 90° zur Längsachse der Fluggastbrücke verschwenkbare Kabine auf, wobei am vorderen Ende ein Kuppelmodul zum Übergang von der Kabine in das Flugzeug angeordnet ist. In gleicher Weise ist auch bei einer Fluggasttreppe ein Kuppelmodul als Schnittstelle für den Übergang zum Flugzeug vorgesehen.

Das Kuppelmodul als Schnittstelle zwischen der eigentlichen Fluggastbrücke bzw. der Fluggasttreppe und dem Flugzeug umfasst nach dem Stand der Technik einen Boden sowie einen den Boden U-förmig umspannenden Balg als Dach. Der Balg weist ebenfalls U-förmig umlaufend einen sogenannten Bumper auf, wobei der Balg, um ein vollflächiges Anliegen des U-förmigen Balgs stirnseitig an der Außenhaut des Flugzeugs zu gewährleisten, zu beiden Seiten unterschiedlich weit ausgefahren werden kann. Diese Problematik ist an sich hinreichend bekannt. In Bezug auf den Boden ist aus dem Stand der Technik bekannt, dass der Boden ein feststehendes Element und ein Bodenkopfteil aufweist, das als Ganzes relativ zum feststehenden Bodenelement horizontal verschieblich ist. Das bedeutet jedoch, dass, wenn ein solches Kuppelmodul im Bereich des vorderen Endes eines Flugzeugs, also im Bereich des Übergangs zum Cockpit angesetzt wird, dann zumindest in Richtung auf das Cockpit ein Spalt verbleibt. Wenn die Flugzeugtür nach außen aufschwenkt, wird der Spalt oder zumindest ein Teil des Spaltes durch die Flugzeugtür nach oben hin abgedeckt. Ist dies nicht der Fall, also öffnet die Tür beispielsweise nach innen, dann muss durch eine Absperrung verhindert werden, dass Personen in den Bereich dieses Spaltes gelangen können. Insofern ist auch bereits bekannt, den Boden zweigeteilt zu gestalten, wobei der eine Teil des Bodens in Richtung auf das Flugzeug zu ausschwenkbar ist. Es ist unmittelbar einsichtig, dass mit einer solchen Lösung eine Spaltbildung zwischen dem Rumpf des Flugzeugs einerseits und der Stirnseite des Bodens andererseits zwar vermindert aber nicht gänzlich vermieden werden kann.

Die der Erfindung zugrunde liegende Aufgabe besteht demzufolge darin, einen Boden eines Kuppelmoduls als Schnittstelle zwischen einer Fluggastbrücke oder einer Fluggasttreppe der eingangs genannten Art bereitzustellen, mit der ein im Wesentlichen spaltfreier Übergang vom Boden des Kuppelmoduls zum Flugzeugrumpf ermöglicht wird.

Zur Lösung der Aufgabe wird bei einem Boden der eingangs genannten Art vorgeschlagen, dass das Bodenkopfteil mehrere Bodensegmente aufweist, die durch eine flexible Puffertraverse untereinander in Verbindung stehen, wobei die mehreren Bodensegmente relativ zueinander horizontal verschieblich sind. Durch die in Längsrichtung flexible Puffertraverse, an der auf der Oberseite die einzelnen Bodensegmente angeordnet sind, besteht nunmehr die Möglichkeit in Abhängigkeit von der Größe der einzelnen Bodensegmente einen im Wesentlichen spaltfreien Übergang von dem Boden des Kuppelmoduls zur Außenhaut des Flugzeugs bereitzustellen. An den der Puffertraverse gegenüberliegenden Enden stehen die Bodenelemente mit dem feststehenden Bodenabschnitt in Verbindung. Das Bodenkopfteil ist durch Führungselemente in Führungsaufnahmen am Boden des Kuppelmoduls am feststehenden Bodenabschnitt gehalten.

Vorteilhafte Merkmale und Ausbildungen der Erfindung sind den Unteransprüchen zu entnehmen.

So ist nach einem besonderen Merkmal der Erfindung insbesondere vorgesehen, dass der Boden zur horizontalen Verschiebung der Bodensegmente eine Antriebseinrichtung aufweist. Hieraus wird deutlich, dass die einzelnen Bodensegmente horizontal, d. h. in Richtung auf den Flugzeugrumpf zu, verschieblich sind, und zwar mittels einer Antriebseinrichtung, um ein automatisches Anlegen des Bodens an die Außenhaut des Flugzeugs zu ermöglichen.

Die Antriebseinrichtung selbst umfasst im Einzelnen mehrere, insbesondere zwei Federelemente, die vorteilhaft als Gasdruckfedern ausgebildet sind, die an ihrem einen Ende feststehend z. B. am Bodenrahmen gelagert sind, und an ihrem anderen Ende mit der flexiblen und verschieblichen Puffertraverse in Verbindung stehen.

Insbesondere hat sich als vorteilhaft herausgestellt, dass zum Einfahren eines oder mehrerer Bodensegmente eine Zugeinrichtung vorgesehen ist, wobei die Zugeinrichtung entgegen der Kraft der Federelemente und hier insbesondere der Gasdruckfedern wirkt. Das bedeutet, dass durch die Gasdruckfedern die Puffertraverse über ihre Länge in horizontaler Richtung nach außen gedrückt wird, durch die Zugeinrichtung dem aber entgegengewirkt wird, sodass durch Betätigung der Zugeinrichtung ein Anlegen im Sinne eines Anschmiegens der Puffertraverse an die Außenhaut des Flugzeugs ermöglicht wird. Die Zugeinrichtung umfasst mindestens zwei Riemen, wobei die mindestens zwei Riemen beabstandet zueinander mit der flexiblen Puffertraverse in Verbindung stehen. Im Einzelnen ist in diesem Zusammenhang insbesondere vorgesehen, dass das eine längere Federelement, beispielsweise eine Gasdruckfeder, an dem einen Ende der flexiblen Puffertraverse angeordnet ist, das am weitesten ausgeschwenkt werden soll, wohingegen das zweite kürzere Federelement an einer Stelle der flexiblen Puffertraverse angeordnet ist, von wo ab die Puffertraverse im Wesentlichen gerade verläuft, also keine bogenförmige Auslenkung erfährt, sondern, falls erforderlich, lediglich um einen geringen Betrag gerade ausfahrbar ist. Denkbar ist in diesem Zusammenhang allerdings auch, drei Federelemente vorzusehen, und zwar ein Federelement etwa in der Mitte der flexiblen Puffertraverse anzuordnen und die beiden restlichen Federelemente jeweils endseitig an der Traverse anzulenken. Insofern ist dann möglich, auch eine kreisbogenförmige Rundung nachzubilden, was in Bezug auf die Außenhaut verschiedener Flugzeugtypen ebenfalls von Interesse ist.

Nach einem weiteren Merkmal der Erfindung umfasst die Zugeinrichtung einen Rohrmotorantrieb, wobei der Rohrmotorantrieb mindestens zwei Federspeicherrollen zur Aufnahme jeweils eines Riemens aufweist. Ein Rohrmotorantrieb stellt sich als ein Rohr dar, das mittels eines darin angeordneten Motors in Rotation versetzt wird. Auf dem Außenmantel des Rohrmotorantriebs befinden sich die mindestens zwei Federspeicherrollen.

Es wurde bereits an anderer Stelle erwähnt, dass die Federelemente, insbesondere die Gasdruckfedern, einen unterschiedlichen Weg in horizontaler Richtung ausführen. Dies bedingt, bei entsprechender Anordnung der mindestens zwei Riemen, dass die Anzahl der Umdrehungen des Rohrmotors zur Freigabe des Riemens für die Ausstellbewegung der flexiblen Puffertraverse nach der größten Auslenkung des am weitesten ausstellbaren Federelements ausgerichtet wird. Das bedeutet aber, dass der andere, ebenfalls auf einer Federspeicherrolle angeordnete Riemen, dessen Ausstellweg kürzer ist, ebenfalls kürzer ausgezogen wird. Da aber die Zahl der Umdrehungen des Rohrmotors über seine Länge gleich ist, hätte dies zur Folge, dass der Riemen durchhängt. Durch die Verwendung von Federspeicherrollen kann die überschüssige Riemenlänge kompensiert werden.

Nach einem weiteren Merkmal der Erfindung sind die Bodensegmente zueinander in der Höhe versetzt miteinander verschieblich verbunden. Dies vor dem Hintergrund, dass bei einer Schwenkbewegung der Puffertraverse die damit verbundenen Bodensegmente eine ebenfalls bogenförmige Bewegung ausführen, und insofern durch die in der Höhe versetzte Anordnung der Bodensegmente zueinander eine Überlappung ermöglicht wird. In diesem Zusammenhang ist weiterhin vorgesehen, dass die Bodensegmente mit der flexiblen Puffertraverse durch jeweils eine vertikale Achse schwenkbar in Verbindung stehen.

Um zu verhindern, dass beim Anlegen der Puffertraverse an der Flugzeughaut Beschädigungen auftreten, weist die z. B. aus einem Federstahl hergestellte Puffertraverse einen elastischen Stoßpuffer (Bumper) auf der äußeren Stirnseite auf.

Anhand der Zeichnungen wird die Erfindung nachstehend beispielhaft näher erläutert.
- Fig. 1: zeigt das Kuppelmodul perspektivisch in einer Ansicht schräg von oben;
- Fig. 2: zeigt eine perspektivische Ansicht von unten auf den Boden des Kuppelmoduls;
- Fig. 3: zeigt eine Ansicht von unten auf den Boden im eingefahrenen Zustand des Bodenkopfteils;
- Fig. 4: zeigt eine Ansicht gemäß Fig. 3, allerdings im ausgefahrenen Zustand des Bodenkopfteils;
- Fig. 5: zeigt eine perspektivische Seitenansicht.

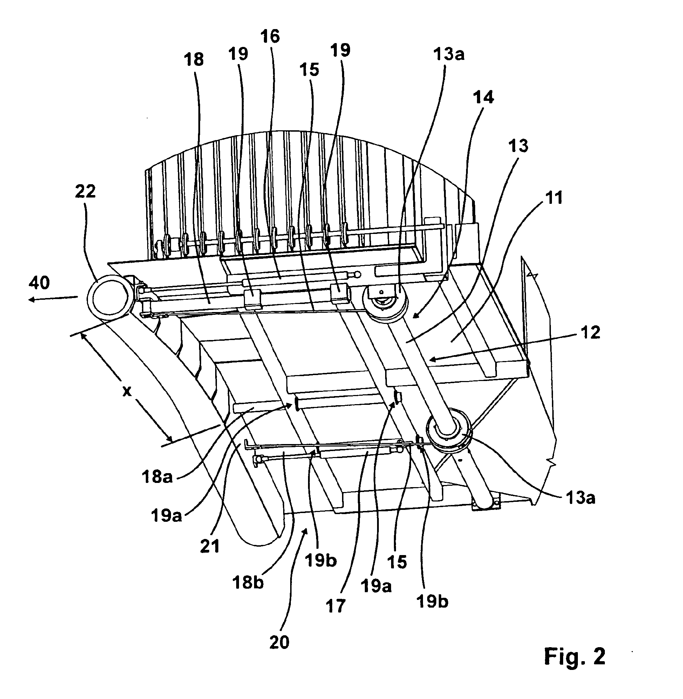

Das insgesamt mit 1 bezeichnete Kuppelmodul umfasst den U-förmig ausgebildeten Balg 2 mit dem frontseitig angeordneten Bumper 3. Der Boden des Kuppelmoduls ist insgesamt mit 10 bezeichnet. Der Boden 10 umfasst einen feststehenden Bodenabschnitt 11 und das Bodenkopfteil 20. Gegenstand der Erfindung ist nunmehr die horizontale Verschieblichkeit des Bodenkopfteils 20 relativ zum feststehenden Bodenabschnitt 11. In diesem Zusammenhang wird für die folgenden Erörterungen auf die Zeichnungen gemäß Fig. 2 ff. verwiesen.

Aus der Fig. 2 ergibt sich in diesem Zusammenhang unter dem feststehenden Bodenabschnitt 11 eine Rahmenkonstruktion, die die insgesamt mit 12 bezeichnete Zugeinrichtung aufnimmt. Die mit 12 bezeichnete Zugeinrichtung umfasst den Rohrmotorantrieb 13 mit den beiden Federrollenspeichern 13a auf dem Rohr des Rohrmotorantriebs. Der Motor des Antriebs befindet sich im Rohr und ist insofern nicht sichtbar.

Jeder Federspeicherrolle zugeordnet ist ein Riemen 15, der mit der flexiblen Puffertraverse 21 in Verbindung steht, wie sich dies insbesondere auch aus Fig. 2 ergibt. An der Unterseite des Bodenabschnitts 11 sind darüber hinaus zwei Gasdruckfedern 16, 17 befestigt, die mit ihrem einen Ende ebenfalls an der flexiblen Puffertraverse 21 gelenkig angeordnet sind. Die Gasdruckfedern sind unterschiedlich lang und weisen insofern eine unterschiedliche Auszugsweite auf. Zur Führung der flexiblen Puffertraverse 21 sind Führungselemente 18, 18a und 18b vorgesehen. Das Führungselement 18 ist als Rechteckrohr ausgebildet, das in entsprechenden Führungsaufnahmen 19 an der Unterseite des Bodenabschnitts 11 geführt ist, wie sich dies ebenfalls in Anschauung von Fig. 2 ergibt. Die Führungselemente 18a und 18b sind als Rundstangen ausgebildet, die ebenfalls in entsprechenden Aufnahmen 19a und 19b verschieblich in dem Rahmen des Bodens geführt sind.

Die Puffertraverse 21 ist über den Längenabschnitt X, z. B. durch Verwendung eines Federstahls, elastisch nachgiebig ausgebildet. Es sei an dieser Stelle erwähnt, dass die Erfindung auch eine Puffertraverse 21 umfasst, die über ihre gesamte Länge elastisch nachgiebig ausgebildet ist. An ihrer Vorderseite weist die Puffertraverse 21 den Bumper 22 auf.

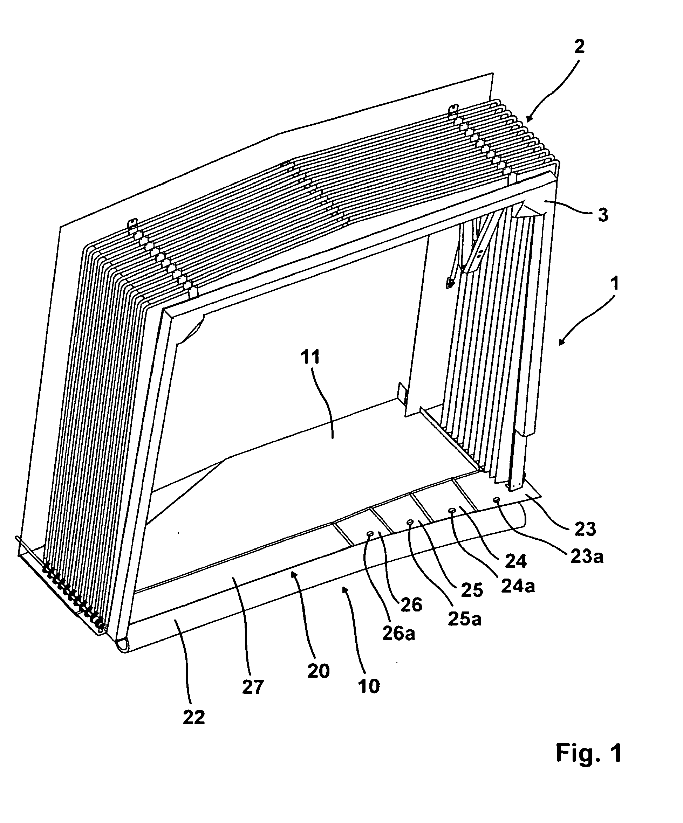

Auf der Oberseite der Puffertraverse 21 befinden sich, wie sich dies bereits in der Anschauung von Fig. 1 ergibt, mehrere Bodensegmente 23, 24, 25, 26 und 27, die das Bodenkopfteil 20 bilden. Die schwenkbare Anlenkung der Bodensegmente 23 bis 26 an der Puffertraverse erfolgt durch jeweils eine Achse 23a bis 26a. Das heißt um diese Achse 23a bis 26a herum sind die Bodensegmente 23 bis 26 beweglich durch die Puffertraverse 21 aufgenommen, was erforderlich ist, wenn die Puffertraverse über ihre Länge X in Richtung des Pfeils 40 ausschwenken soll.

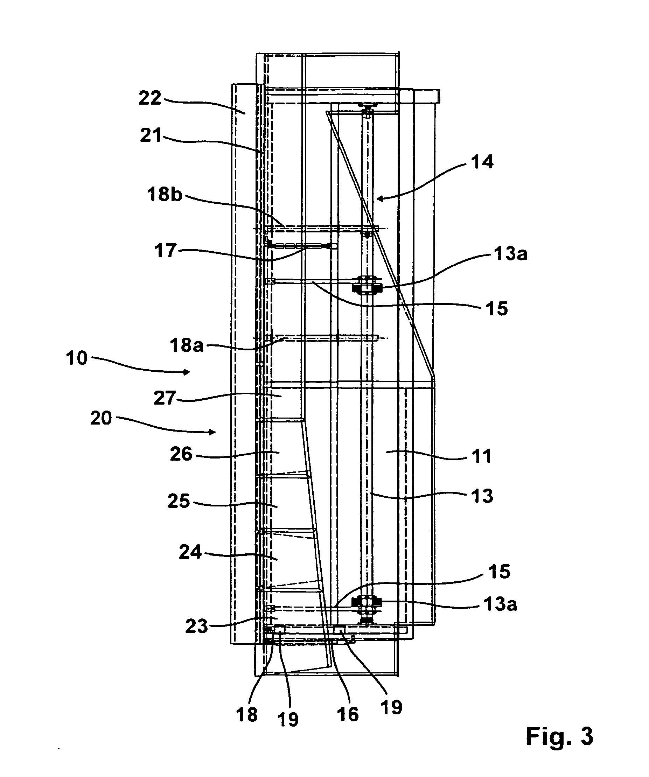

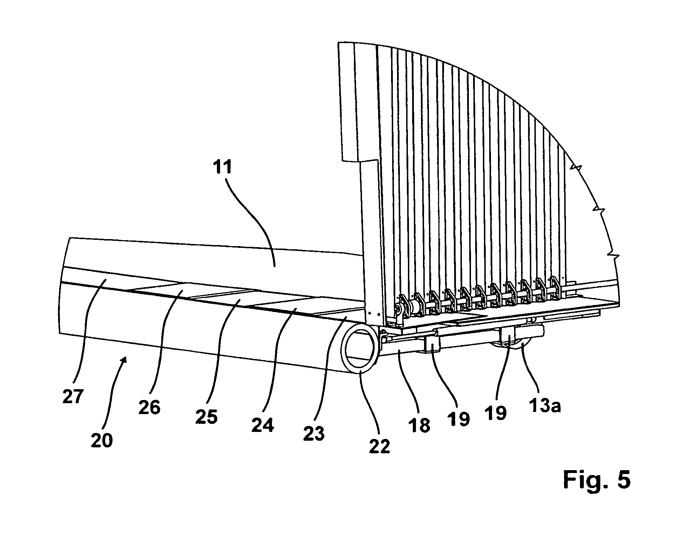

Wie sich weiterhin aus den Zeichnungen und hier insbesondere Fig. 5, entnehmen lässt, sind die einzelnen Bodensegmente 23 bis 26 in der Höhe abwechselnd versetzt zueinander auf der Puffertraverse durch die jeweiligen Achsen 23a bis 26a aufgenommen. Das heißt, dass sich die einzelnen Bodensegmente 23 bis 26 relativ zueinander in der Ebene gegeneinander verschieben können, wie es erforderlich ist, wenn die Puffertraverse in Richtung des Pfeils 40 ausschwenkt und insofern sich die Bodensegmente 23 bis 26 im vorderen Bereich an der Traverse aufeinander zubewegen. In der Ausgangslage, wie in Fig. 3 dargestellt, sind die einzelnen Bodensegmente an ihrem hinteren Ende überlappend gelagert. Bei der Ausstellbewegung verliert sich diese Überlappung zum Teil, bleibt aber immer mit einem bestimmten Betrag erhalten.

Im vorliegenden Fall ist das Bodensegment 27 im Wesentlichen nicht ausschwenkbar, wobei allerdings nochmals darauf hingewiesen wird, dass auch das Bodensegment 27 in weitere Teilsegmente unterteilt werden kann, wenn dies entsprechend dem Flugzeugtyp für ein spaltfreies Anlegen des Bodens an die Außenkontur des Flugzeugs erforderlich ist.

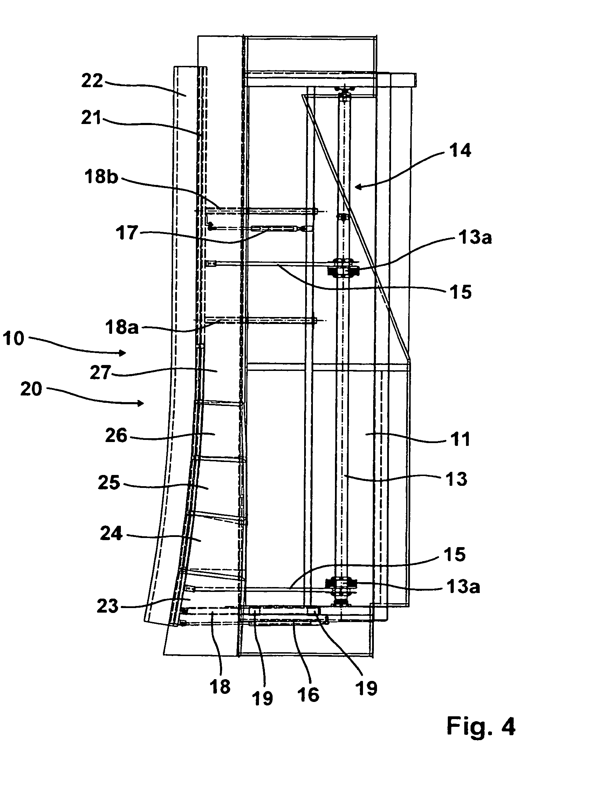

Die Bodensegmente, die verschwenkbar sind, sind unter dem feststehenden Bodenabschnitt horizontal beweglich gelagert, um bei einer Ausschwenkbewegung (Fig. 3, Fig. 4) keinen Spalt im Boden entstehen zu lassen.

Für das Anlegen der Puffertraverse wird nunmehr wie folgt vorgegangen. Befindet sich der Boden insgesamt noch etwas beabstandet zum Flugzeugrumpf, wird zunächst das Bodenkopfteil 20 insgesamt in Richtung des Flugzeugrumpfes, also horizontal ausgestellt. Der maximale Ausstellweg über die gesamte Breite des Bodens ist vorgegeben durch die Größe der kleinsten Gasdruckfeder 17. Der Ausstellweg der Gasdruckfeder 16 ist länger, wobei insofern ein konturkonformes Anlegen der Puffertraverse möglich wird. Beim Ausfahren bildet der Riemen im Bereich der kürzeren Gasdruckfeder eine Reserve, die durch die Federspeicherrolle aufgenommen wird.

Zum Einziehen des Bodenkopfteils dient die Zugeinrichtung mit den beiden Riemen. Der Rohrmotor läuft so lange, bis auch der Riemen 15 im Bereich der längeren Gasdruckfeder 16 vollständig auf der Federspeicherrolle 13a aufgerollt ist. Die Feder der Federspeicherrolle 13a im Bereich der Gasdruckfeder 17 ist dann nach Zusammenfahren der Gasdruckfeder gespannt. Die hierbei gebildete "Reserve" der Feder sorgt dann dafür, dass bei Rotation des Rohrmotors der Riemen 15 der Federspeicherrolle 13a nicht durchhängt, wenn die Gasdruckfeder 16 ihre Endlage erreicht.

### Bezugszeichenliste:

- 1: Kupplungsmodul
- 2: Balg
- 3: Bumper
- 10: Boden
- 11: feststehender Bodenabschnitt
- 12: Zugeinrichtung
- 13: Rohrmotorantrieb
- 13a: Federspeicherrollen
- 14: Antriebseinrichtung
- 15: Riemen
- 16: Federelement
- 17: Federelement
- 18: Führungselement
- 18a: Führungselement
- 18b: Führungselement
- 19: Führungsaufnahme
- 19a: Führungsaufnahme
- 19b: Führungsaufnahme
- 20: Bodenkopfteil
- 21: Puffertraverse
- 22: Bumper (Puffertraverse)
- 23: Bodensegment
- 24: Bodensegment
- 25: Bodensegment
- 26: Bodensegment
- 27: Bodensegment
- 23a: Achse
- 24a: Achse
- 25a: Achse
- 26a: Achse
- 40: Pfeil
- X: Länge

## Patentansprüche

1. Boden (10) eines Kuppelmoduls (1) als Schnittstelle zwischen einer Fluggastbrücke oder einer Fluggasttreppe und dem Flugzeug, wobei der Boden (10) einen feststehenden Bodenabschnitt (11) und ein Bodenkopfteil (20) umfasst, wobei das Bodenkopfteil (20) mehrere Bodensegmente (23 - 27) aufweist, die durch eine zumindest über einen Teil ihrer Länge flexible Puffertraverse (21) untereinander in Verbindung stehen, wobei mehrere Bodensegmente (23 - 27) relativ zueinander horizontal verschieblich sind.

2. Boden eines Kuppelmoduls nach Anspruch 1,
**dadurch gekennzeichnet,**
**dass** der Boden (10) zur horizontalen Verschiebung der Bodensegmente (23 - 27) eine Antriebseinrichtung (14) aufweist.

3. Boden eines Kuppelmoduls nach einem der voranstehenden Ansprüche,
**dadurch gekennzeichnet,**
**dass** Antriebseinrichtung (14) mehrere Federelemente (16, 17) umfasst, die an ihrem einen Ende feststehend gelagert sind, und an ihrem anderen Ende mit der flexiblen Puffertraverse (21) in Verbindung stehen.

4. Boden eines Kuppelmoduls nach einem der voranstehenden Ansprüche **dadurch gekennzeichnet,**
**dass** die Federelemente (16, 17) als Gasdruckfedern ausgebildet sind.

5. Boden eines Kuppelmoduls nach einem der voranstehenden Ansprüche **dadurch gekennzeichnet,**
**dass** zum Einfahren eines oder mehrerer Bodensegmente (23 - 27) eine Zugeinrichtung (12) als Teil der Antriebseinrichtung (14) vorgesehen ist.

6. Boden eines Kuppelmoduls nach einem der voranstehenden Ansprüche **dadurch gekennzeichnet,**
**dass** die Zugeinrichtung (12) mindestens zwei Riemen (15) umfasst.

7. Boden eines Kuppelmoduls nach einem der voranstehenden Ansprüche **dadurch gekennzeichnet,**
**dass** die Zugeinrichtung (12) einen Rohrmotorantrieb (13) umfasst, wobei der Rohrmotorantrieb (13) mindestens zwei Federspeicherrollen (13a) zur Aufnahme jeweils eines Riemens (15) aufweist.

8. Boden eines Kuppelmoduls nach einem der voranstehenden Ansprüche **dadurch gekennzeichnet,**
**dass** die Puffertraverse (21) durch Führungselemente (18, 18a, 18b) in Führungsaufnahmen (19, 19a, 19b) verschieblich geführt ist.

9. Boden eines Kuppelmoduls nach einem der voranstehenden Ansprüche **dadurch gekennzeichnet,**
**dass** die Puffertraverse (21) frontseitig einen Bumper (22) aufweist.

10. Boden eines Kuppelmoduls nach einem der voranstehenden Ansprüche **dadurch gekennzeichnet,**
**dass** die Federelemente (16, 18) eine unterschiedliche Auszugslänge aufweisen.

11. Boden eines Kuppelmoduls nach einem der voranstehenden Ansprüche **dadurch gekennzeichnet,**
**dass** die Bodensegmente (23 - 27) in der Höhe versetzt zueinander miteinander verschieblich in Verbindung stehen.

12. Boden eines Kuppelmoduls nach einem der voranstehenden Ansprüche **dadurch gekennzeichnet,**
**dass** die Bodensegmente (23 - 27) mit der flexiblen Puffertraverse (21) durch jeweils eine vertikale Achse (23a - 26a) schwenkbar in Verbindung stehen.

13. Boden eines Kuppelmoduls nach einem der voranstehenden Ansprüche **dadurch gekennzeichnet,**
**dass** die flexible Puffertraverse (21) aus einem biegsamen Material, z. B. einem Federstahl hergestellt ist.

## Claims

1. A floor (10) of a coupling module (1) as an interface between an air passenger bridge or air passenger stairs and the airplane, the floor (10) comprising a static floor section (11) and a floor head part (20), the floor head part (20) having several floor segments (23 - 27), which are connected to each other by a buffer cross beam (21) that is flexible across at least part of its length, several floor segments (23 - 27) being horizontally displaceable relative to each other.

2. The floor of a coupling module according to claim 1, **characterized in that**
the floor (10) has a drive arrangement (14) for horizontally displacing the floor segments (23 - 27).

3. The floor of a coupling module according to one of the aforementioned claims,
**characterized in that**
the drive arrangement (14) comprises several spring elements (16, 17), which are statically mounted at their one end and are connected at their other end with the flexible buffer cross beam (21).

4. The floor of a coupling module according to one of the aforementioned claims,
**characterized in that**
the spring elements (16, 17) are configured as gas springs.

5. The floor of a coupling module according to one of the aforementioned claims,
**characterized in that**
for retracting one or several floor segments (23 - 27), a pulling arrangement (12) is provided as a part of the drive arrangement (14).

6. The floor of a coupling module according to one of the aforementioned claims,
**characterized in that**
the pulling arrangement (12) comprises at least two straps (15).

7. The floor of a coupling module according to one of the aforementioned claims,
**characterized in that**
the pulling arrangement (12) comprises a tubular motor drive (13), the tubular motor drive (13) having at least two spring accumulator rolls (13a) for receiving respectively one strap (15).

8. The floor of a coupling module according to one of the aforementioned claims,
**characterized in that**
the buffer cross beam (21) is displaceably guided by guide elements (18, 18a, 18b) in guide supports (19, 19a, 19b).

9. The floor of a coupling module according to one of the aforementioned claims,
**characterized in that**
the buffer cross beam (21) has a bumper (22) on its front side.

10. The floor of a coupling module according to one of the aforementioned claims,
**characterized in that**
the spring elements (16, 18) have different extension lengths.

11. The floor of a coupling module according to one of the aforementioned claims,
**characterized in that**
the floor segments (23 - 27) are offset relative to each other in height and displaceably connected to each other.

12. The floor of a coupling module according to one of the aforementioned claims,
**characterized in that** the floor segments (23 - 24) are pivotably connected with the flexible buffer cross beam (21) by way of respectively one vertical axis (23a - 26a).

13. The floor of a coupling module according to one of the aforementioned claims,
**characterized in that**
the flexible buffer cross beam (21) is made of a bendable material, for example a spring steel.

## Revendications

1. Plancher (10) d'un module de couplage (1) constituant une zone de coupure d'un pont d'accès passagers à un avion ou d'un escalier d'accès passagers à un avion, dans lequel le plancher (10) comporte une section de plancher fixe (11) et un élément de plancher frontal (20), dans lequel l'élément de plancher frontal (20) comprend plusieurs segments de plancher (23 - 27) qui sont couplés entre eux au moins sur une partie de leur longueur par une traverse tampon (21) flexible, dans lequel plusieurs segments de plancher (23- 27) peuvent être coulissés horizontalement les uns relativement aux autres.

2. Plancher d'un module de couplage selon la revendication 1, **caractérisé en ce que**
le plancher (10) comporte un équipement d'entraînement (14) pour assurer le déplacement coulissant horizontal des segments de plancher (23 - 27).

3. Plancher d'un module de couplage selon l'une quelconque des
revendications précédentes,
**caractérisé en ce que**
l'équipement d'entraînement (14) comprend plusieurs éléments ressorts (16, 17) qui sont fixes à une de leur de leur extrémité et qui sont liés par leur autre extrémité à la traverse tampon (21) flexible.

4. Plancher d'un module de couplage selon l'une quelconque des
revendications précédentes,
**caractérisé en ce que**
les éléments ressorts (16, 17) sont des ressorts à gaz.

5. Plancher d'un module de couplage selon l'une quelconque des
revendications précédentes,
**caractérisé en ce que**
pour engager un ou plusieurs des segments de plancher (23 - 27) il est prévu d'utiliser un dispositif de traction (12) qui constitue une partie de l'équipement d'entraînement (14).

6. Plancher d'un module de couplage selon l'une quelconque des
revendications précédentes,
**caractérisé en ce que**
le dispositif de traction (12) comporte au moins deux courroies (15).

7. Plancher d'un module de couplage selon l'une quelconque des
revendications précédentes,
**caractérisé en ce que**
le dispositif de traction (12) comporte un moteur d'entraînement tubulaire (13), ce moteur d'entraînement tubulaire (13) comportant au moins deux rouleaux d'accumulation à ressorts (13a) respectivement destinés à recevoir une des courroies (15).

8. Plancher d'un module de couplage selon l'une quelconque des
revendications précédentes,
**caractérisé en ce que**
la traverse tampon (21) est guidée en coulissement dans des supports de guidage (19, 19a, 19b) au moyen d'éléments de guidage (18, 18a, 18b).

9. Plancher d'un module de couplage selon l'une quelconque des
revendications précédentes,
**caractérisé en ce que**
la traverse tampon (21) comporte un amortisseur (22) disposé frontalement.

10. Plancher d'un module de couplage selon l'une quelconque des
revendications précédentes,
**caractérisé en ce que**
les éléments ressorts (16, 18) présentent une longueur d'extension différenciée.

11. Plancher d'un module de couplage selon l'une quelconque des
revendications précédentes,
**caractérisé en ce que**
les segments de plancher (23 - 27) sont décalés en hauteur et sont mobiles en coulissement les uns par rapport aux autres.

12. Plancher d'un module de couplage selon l'une quelconque des
revendications précédentes,
**caractérisé en ce que**
les segments de plancher (23 - 27) sont couplés avec la traverse tampon (21) flexible et mobiles en pivotement par rapport à elle respectivement au moyen d'axes verticaux (23a - 26a).

13. Plancher d'un module de couplage selon l'une quelconque des
revendications précédentes,
**caractérisé en ce que**
la traverse tampon (21) flexible est réalisée en un matériau flexible, par exemple en acier à ressort.
